# FASCICULE DE BREVET EUROPEEN

(11) **EP 2 000 365 B1**
(45) Date de publication et mention de la délivrance du brevet: **21.03.2012**
(21) Numéro de dépôt: 08300217.0
(22) Date de dépôt: 02.06.2008
(51) Int. Cl.: B60R 13/07, B60R 13/04, B60R 13/06

(54) **Pièce de butée pour ensemble d'enjoliveur de pavillon de toit de véhicule automobile**
Anschlagteil für Zierkappe des Dachs eines Kraftfahrzeugs
Stop part for the ceiling trim assembly of an automobile vehicle roof

(30) Priorité: 04.06.2007 FR 0755450
(43) Date de publication de la demande: 10.12.2008
(73) Titulaire: Renault S.A.S., 92100 Boulogne-Billancourt (FR)
(72) Inventeur: KHAZAAL, Julien, 78310, MAUREPAS (FR); POURRIAS, Jean-Yves, 92160, ANTONY (FR); SIMON, Marc, 93130, NOISY LE SEC (FR)

(56) Documents cités:
- DE-A1- 4 007 391
- DE-A1- 19 758 007
- US-A- 4 792 180

## Description

L'invention concerne un enjoliveur de pavillon de toit de véhicule automobile.

Dans un véhicule automobile, la caisse comporte généralement une pièce de pavillon s'étendant sur le dessus de l'habitacle et des pièces de côté de caisse s'étendant sur les flancs latéraux du véhicule. Chaque pièce de côté de caisse est disposée d'un côté de la pièce de pavillon et est destinée à recevoir une portière.

La pièce de pavillon et une pièce de côté de caisse sont fixées l'une à l'autre, généralement par soudage, en formant entre elles une gorge. La gorge ainsi formée s'étend le long d'un bord latéral du toit du véhicule depuis l'encadrement de pare-brise jusqu'à l'encadrement de lunette arrière du véhicule. La gorge est apte à recevoir un enjoliveur de pavillon pour masquer la jonction entre la pièce de pavillon et la pièce de côté de caisse.

Chaque enjoliveur de pavillon comprend généralement une pièce de parement (par exemple en aluminium ou en matière plastique) destinée à être visible, et une pièce de joint (par exemple en caoutchouc) formant des lèvres destinées à être insérées dans la gorge pour maintenir l'enjoliveur dans la gorge.

Au cours des opérations de montage de la caisse, un opérateur vient insérer en force l'enjoliveur de pavillon dans la gorge. Le contrôle du positionnement de l'enjoliveur dans la direction longitudinale de la caisse est alors réalisé par l'opérateur de manière visuelle.

Cependant, cette technique ne permet pas d'obtenir un positionnement reproductible de l'enjoliveur de pavillon.

En particulier, cette technique ne permet pas de maîtriser les jeux entre l'enjoliveur, le pavillon de toit et la pièce de pare-brise qui supporte le pare-brise.

US 4792180A décrit un ensemble d'enjoliveur de toit de véhicule automobile selon le préambule de la revendication 1.

Un but de l'invention est de permettre un positionnement longitudinal plus précis d'un enjoliveur de pavillon de toit lors des opérations de montage de la caisse du véhicule.

Ce problème est résolu dans le cadre de la présente invention grâce à un ensemble d'enjoliveur de pavillon de toit de véhicule automobile, comprenant un enjoliveur adapté pour être inséré dans une gorge ménagée entre une pièce de pavillon de toit et une pièce de côté de caisse pour masquer une jonction entre la pièce de pavillon de toit et la pièce de côté de caisse, caractérisé en ce qu'il comprend en outre une pièce de butée apte à venir en appui sur la pièce de pavillon de toit pour positionner l'enjoliveur par rapport à la pièce de pavillon de toit selon une direction longitudinale du véhicule.

Grâce à la pièce de butée, l'enjoliveur de pavillon de toit peut être positionné de manière précise par rapport au véhicule.

L'ensemble peut en outre présenter les caractéristiques suivantes
- la pièce de butée comprend une découpe présentant une forme complémentaire d'un coin de la pièce de pavillon de toit, la découpe étant apte à venir en appui contre un coin de la pièce de pavillon de toit pour immobiliser la pièce de butée selon des directions longitudinale et transversale du véhicule,
- la pièce de butée comprend au moins une ailette présentant une tranche de forme générale courbe apte à épouser la forme d'une partie d'extrémité d'une pièce de parement de l'enjoliveur de pavillon de toit pour positionner la pièce de parement selon une direction longitudinale du véhicule,
- la pièce de butée comprend des moyens de fixation de la pièce de butée à une pièce de joint de l'enjoliveur de pavillon de toit,
- les moyens de fixation comprennent un pion apte à être inséré dans une gorge d'une pièce de joint de l'enjoliveur de de toit,
- la pièce de butée comprend des moyens d'indexage de la pièce de butée par rapport à une pièce de joint de l'enjoliveur de pavillon de toit,
- la pièce de butée comprend une surface d'appui adaptée pour recevoir un enjoliveur de pare-brise,

L'invention se rapporte en outre à une pièce de butée pour un ensemble d'enjoliveur de pavillon de toit de véhicule automobile conforme à la définition qui précède.

D'autres caractéristiques et avantages ressortiront encore de la description qui suit, laquelle est purement illustrative et non limitative et doit être lue en regard des dessins annexés, parmi lesquels :
- les figures 1 à 3 représentent de manière schématique une pièce de butée pour enjoliveur de pavillon de toit, conforme à un mode de réalisation de l'invention, respectivement en vue de côté, en vue de face et en vue de dessus,
- les figures 4 et 5 représentent de manière schématique, en perspective, un enjoliveur de pavillon de toit muni de la pièce de butée lorsqu'ils sont mis en place sur la caisse du véhicule, avant assemblage d'un enjoliveur de pare-brise,
- les figures 6 et 7 représentent de manière schématique, un enjoliveur de pavillon de toit muni de la pièce de butée lorsqu'ils sont mis en place sur la caisse du véhicule, après assemblage d'un enjoliveur de pare-brise, respectivement en perspective et en coupe,
- la figure 8 représente une section d'un enjoliveur de pavillon de toit.

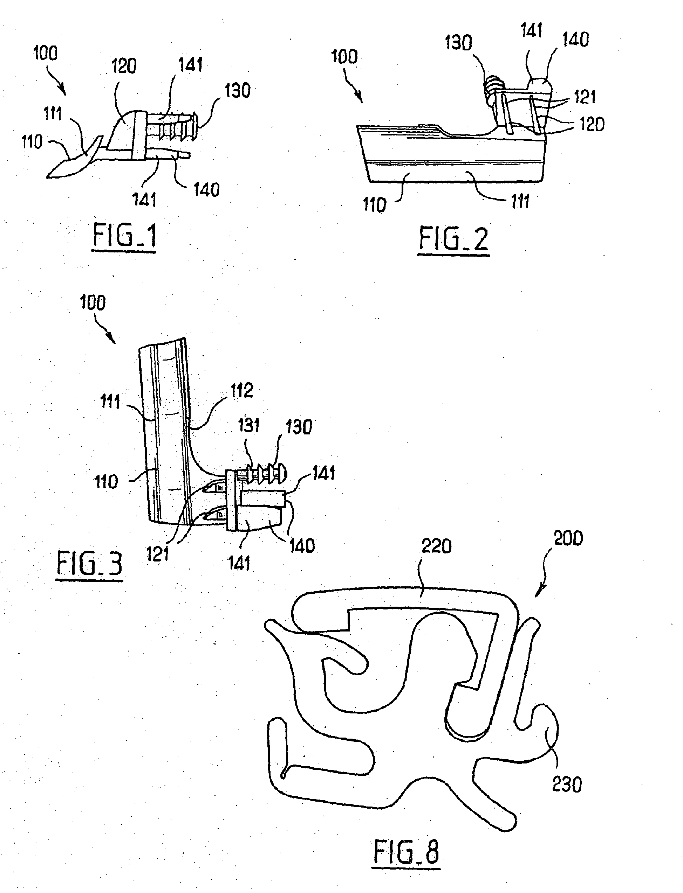

Sur les figures 1 à 3, la pièce de butée 100 représentée est destinée à être disposée au niveau d'un coin avant gauche d'un pavillon de toit d'un véhicule. Bien entendu, une pièce symétrique non représentée est destinée à être disposée de la même manière au niveau d'un coin avant droit du véhicule.

La pièce de butée 100 comprend une première partie 110, une deuxième partie 120, une troisième partie 130 et une quatrième partie 140.

La première partie 110 comprend une première surface 111 orientée vers l'avant et une découpe 112 à l'arrière.

La première surface 111 présente une forme allongée et concave. Cette surface est destinée à recevoir en appui un enjoliveur de pare-brise du véhicule pour positionner l'enjoliveur de pare-brise par rapport au pavillon de toit.

La découpe 112 présente une forme courbe apte à épouser la forme d'un coin d'un pavillon de toit. Cette découpe est destinée à venir en appui contre un coin du pavillon de toit pour positionner la pièce de butée 100 par rapport au pavillon selon des directions longitudinale et transversale du véhicule.

La deuxième partie 120 comprend des ailettes 121 présentant chacune une tranche de forme générale courbe apte à épouser la forme d'une surface d'extrémité d'un enjoliveur de pavillon de toit. Les tranches des ailettes sont destinées à recevoir en appui d'une surface d'extrémité d'un enjoliveur de pavillon de toit pour positionner l'enjoliveur par rapport à la pièce de pavillon selon une direction longitudinale du véhicule.

La troisième partie 130 comprend un pion 131 présentant des reliefs coniques en saillie orientés pour former des moyens anti-retour. Le pion 131 est destiné à être inséré dans une direction longitudinale d'une gorge d'une pièce de joint de l'enjoliveur de pavillon de toit pour fixer la pièce de butée 100 sur l'enjoliveur de pavillon de toit.

Enfin, la quatrième partie 140 comprend des pattes 141 destinées à être insérées de part et d'autre de lèvres de la pièce de joint de l'enjoliveur de pavillon de toit pour indexer la position de l'enjoliveur par rapport à la pièce de butée 100.

La pièce est formée d'un seul tenant par moulage par injection de matière plastique.

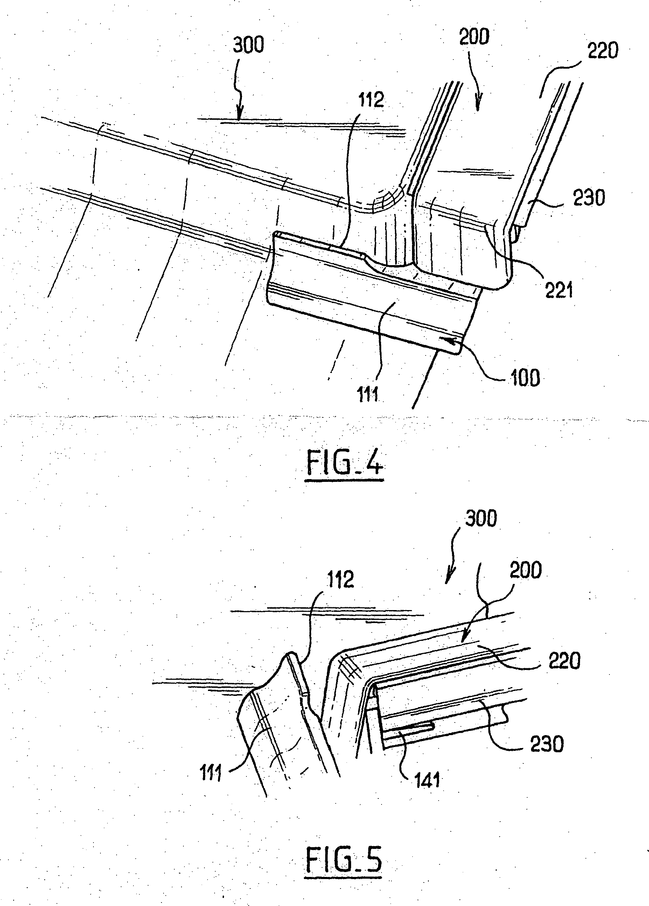

Sur les figures 4 et 5, une pièce de butée 1 00 et un enjoliveur de pavillon de toit 200 ont été mis en place sur un pavillon de toit 300 d'un véhicule.

La pièce de butée 100 est immobilisée par rapport au pavillon de toit grâce à la découpe 112 qui vient en appui contre un coin du pavillon.

Dans cette position, la surface 111 destinée à recevoir l'enjoliveur de pare-brise est orientée vers l'avant du véhicule.

L'enjoliveur de pavillon de toit 200 comprend une pièce de parement 220 et un joint 230. La pièce de parement 220 présente une extrémité avant 221 courbée vers le bas. L'extrémité courbée 221 est maintenue en appui sur la pièce de butée 100 (plus précisément, elle est maintenue en appui sur les ailettes de la pièce de butée qui n'apparaissent pas sur les figures 4 et 5).

La deuxième partie 120 de la pièce de butée est interposée entre l'extrémité courbée 221 de la pièce de parement 220 et le joint 230 de l'enjoliveur de pavillon de toit.

Le pion et les pattes de la pièces 100 sont en prise avec le joint pour maintenir la pièce et le joint fixés l'un sur l'autre.

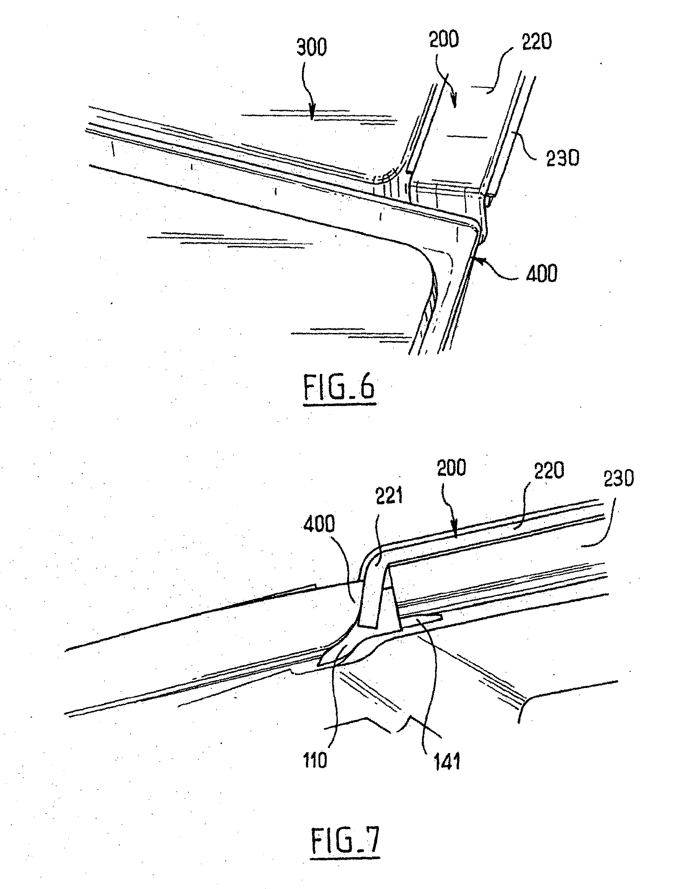

Sur les figures 6 et 7, un enjoliveur de pare-brise 400 a été monté sur la caisse du véhicule. L'enjoliveur de pare-brise 400 est immobilisé en appui contre la surface 111 de la pièce de butée 100.

La figure 8 représente une section transversale d'un enjoliveur de pavillon de toit 200.

L'enjoliveur de pavillon de toit 200 comprend une pièce de parement 220 et une pièce de joint 230.

La pièce de parement 220 présente une section transversale en forme générale de V présentant deux lèvres.

La pièce de joint 230 présentant une section transversale en étoile comprenant une pluralité de lèvres et de gorges s'étendant entre les lèvres.

La pièce de parement 220 est maintenue sur la pièce de joint 230 par insertion d'une lèvre de la pièce de parement dans une gorge de la pièce de joint.

La pièce de joint est apte à être insérée dans une gorge formée entre la pièce de pavillon et la pièce de côté de caisse du véhicule, de sorte que l'enjoliveur de pavillon de toit 200 masque la jonction entre la pièce de pavillon et la pièce de côté de caisse.

La pièce de butée 100 représentée sur les figures 1 à 3 est apte à être fixée sur la pièce de joint 230 grâce au pion 131 et au pattes 141. A cet effet, le pion 131 est inséré dans une direction longitudinale de la pièce de joint 230 entre deux lèvres de celle-ci. En outre, les pattes 141 viennent enserrer une lèvre de la pièce de joint 230 pour indexer la pièce de joint 230 par rapport à la pièce de parement 220.

## Revendications

1. Ensemble d'enjoliveur de pavillon de toit de véhicule automobile, comprenant un enjoliveur (200) adapté pour être inséré dans une gorge ménagée entre une pièce de pavillon de toit (300) et une pièce de côté de caisse pour masquer une jonction entre la pièce de pavillon de toit et la pièce de côté de caisse, **caractérisé en ce qu'**il comprend en outre une pièce de butée (100) apte à venir en appui sur la pièce de pavillon de toit (300) pour positionner l'enjoliveur (200) par rapport à la pièce de pavillon de toit (300) selon une direction longitudinale du véhicule.

2. Ensemble selon la revendication 1, dans lequel la pièce de butée (100) comprend une découpe (112) présentant une forme complémentaire d'un coin de la pièce de pavillon de toit (300), la découpe (112) étant apte à venir en appui contre un coin de la pièce de pavillon de toit (300) pour immobiliser la pièce de butée (100) selon des directions longitudinale et transversale du véhicule.

3. Ensemble selon l'une des revendications qui précèdent, dans lequel la pièce de butée (100) comprend au moins une ailette (121) présentant une tranche de forme générale courbe apte à épouser la forme d'une partie d'extrémité (221) d'une pièce de parement (220) de l'enjoliveur de pavillon de toit pour positionner la pièce de parement (220) selon une direction longitudinale du véhicule.

4. Ensemble selon l'une des revendications qui précèdent, dans lequel la pièce de butée (100) comprend des moyens de fixation (130) de la pièce de butée (100) à une pièce de joint (230) de l'enjoliveur de pavillon de toit (200).

5. Ensemble selon la revendication 4, dans lequel les moyens de fixation (130) comprennent un pion apte à être inséré dans une gorge d'une pièce de joint de l'enjoliveur de pavillon de toit.

6. Ensemble selon l'une des revendications qui précèdent, dans lequel la pièce de butée comprend des moyens d'indexage (141) de la pièce de butée (100) par rapport à une pièce de joint (230) de l'enjoliveur de pavillon de toit.

7. Ensemble selon l'une des revendications qui précèdent, dans lequel la pièce de butée (100) comprend une surface d'appui (111) adaptée pour recevoir un enjoliveur de pare-brise (400).

8. Pièce de butée (100) pour un ensemble d'enjoliveur de pavillon de toit de véhicule automobile selon l'une des revendications 1 à 7.

## Claims

1. Ceiling trim assembly of an automobile vehicle roof, comprising a trim (200) capable of being inserted into a groove formed between a roof ceiling part (300) and a side body part to mask a join between the roof ceiling part and the side body part, **characterized in that** it further comprises a stop part (100) capable of bearing on the roof ceiling part (300) to position the trim (200) relative to the roof ceiling part (300) in a longitudinal direction of the vehicle.

2. Assembly according to Claim 1, in which the stop part (100) comprises a cutout (112) having a shape which is complementary to a corner of the roof ceiling part (300), the cutout (112) being capable of bearing against a corner of the roof ceiling part (300) to immobilize the stop part (100) in the longitudinal and transverse directions of the vehicle.

3. Assembly according to one of the preceding claims, in which the stop part (100) comprises at least one fin (121) having a section of generally curved shape, capable of conforming in shape with an end part (221) of a cladding part (220) of the roof ceiling trim to position the cladding part (220) in a longitudinal direction of the vehicle.

4. Assembly according to one of the preceding claims, in which the stop part (100) comprises means (130) for fixing the stop part (100) to a seal part (230) of the roof ceiling trim (200).

5. Assembly according to Claim 4, in which the means for fixing (130) comprise a pin capable of being inserted into a groove of a seal part of the roof ceiling trim.

6. Assembly according to one of the preceding claims, in which the stop part comprises means (141) for indexing the stop part (100) relative to a seal part (230) of the roof ceiling trim.

7. Assembly according to one of the preceding claims, in which the stop part (100) comprises a bearing surface (111) designed to receive a windscreen trim (400).

8. Stop part (100) for a ceiling trim assembly of an automobile vehicle roof according to one of Claims 1 to 7.

## Patentansprüche

1. Zierleisteneinheit eines Kraftfahrzeug-Dachhimmels, die eine Zierleiste (200) enthält, die geeignet ist, um in eine zwischen einem Dachhimmelbauteil (300) und einem Karosserieseitenteil ausgesparte Rille eingefügt zu werden, um eine Verbindung zwischen dem Dachhimmelbauteil und dem Karosserieseitenteil zu verdecken, **dadurch gekennzeichnet, dass** sie außerdem ein Anschlagbauteil (100) enthält, das auf dem Dachhimmelbauteil (300) in Auflage kommen kann, um die Zierleiste (200) bezüglich des Dachhimmelbauteils (300) in einer Längsrichtung des Fahrzeugs zu positionieren.

2. Einheit nach Anspruch 1, bei der das Anschlagbauteil (100) einen Ausschnitt (112) enthält, der eine zu einer Ecke des Dachhimmelbauteils (300) komplementäre Form hat, wobei der Ausschnitt (112) gegen eine Ecke des Dachhimmelbauteils (300) in Auflage kommen kann, um das Anschlagbauteil (100) in Längs- und Querrichtung des Fahrzeugs zu blockieren.

3. Einheit nach einem der vorhergehenden Ansprüche, bei der das Anschlagbauteil (100) mindestens einen Flügel (121) enthält, der einen Rand von allgemein gekrümmter Form hat, der sich an die Form eines Endbereichs (221) eines Verkleidungsbauteils (220) der Dachhimmel-Zierleiste anpassen kann, um das Verkleidungsbauteil (220) in einer Längsrichtung des Fahrzeugs zu positionieren.

4. Einheit nach einem der vorhergehenden Ansprüche, bei der das Anschlagbauteil (100) Befestigungseinrichtungen (130) des Anschlagbauteils (100) an einem Verbindungsbauteil (230) der Dachhimmel-Zierleiste (200) enthält.

5. Einheit nach Anspruch 4, bei der die Befestigungseinrichtungen (130) einen Zapfen enthalten, der in eine Rille eines Verbindungsbauteils der Dachhimmel-Zierleiste eingeführt werden kann.

6. Einheit nach einem der vorhergehenden Ansprüche, bei der das Anschlagbauteil Indexierungseinrichtungen (141) des Anschlagbauteils (100) bezüglich eines Verbindungsbauteils (230) der Dachhimmel-Zierleiste enthält.

7. Einheit nach einem der vorhergehenden Ansprüche, bei der das Anschlagbauteil (100) eine Auflagefläche (111) enthält, die geeignet ist, um eine Windschutzscheiben-Zierleiste (400) aufzunehmen.

8. Anschlagbauteil (100) für eine Zierleisteneinheit eines Kraftfahrzeug-Dachhimmels nach einem der Ansprüche 1 bis 7.
